# EUROPÄISCHE PATENTANMELDUNG

(11) **EP 3 975 308 A1**
(43) Veröffentlichungstag der Anmeldung: **30.03.2022**
(21) Anmeldenummer: 20198098.4
(22) Anmeldetag: 24.09.2020
(51) Int. Cl.: H01M 10/42

(54) **VERFAHREN ZUM SCHÜTZEN EINES AKKUMULATORS**

(71) Anmelder: 591, 9494 Schaan (LI)
(72) Erfinder: Goyal, Varnim, 86916 Kaufering (DE); Ziegler, Bernd, 86830 Schabmünchen (DE)
(74) Vertreter: Hilti Aktiengesellschaft Corporate Intellectual Property

(57) **Zusammenfassung**

Verfahren zum Betreiben eines Systems enthaltend wenigstens einen Akkumulator (2), eine Datenverarbeitungsvorrichtung (3) mit einer Speichereinrichtung (4), eine Steuerungseinrichtung (5), wenigstens einen Sensor (6) sowie eine Sende- und Empfangseinrichtung (7) mit den Verfahrensschritten:
- Erfassen von Werten durch den wenigstens einen Sensor;
- Senden der erfassten Werte mit der Sende- und Empfangseinrichtung zu der Datenverarbeitungsvorrichtung;
- Abgleichen der erfassten Werte mit in der Speichereinrichtung hinterlegten Schwellwerten;
- Speichern des Ereignisses in der Speichereinrichtung, dass ein erfasster Wert einen Schwellwert erreicht; und
- Einstellen des wenigstens einen Akkumulators von einem ersten Betriebszustand in einen zweiten Betriebszustand, wenn ein erster Schwellwert einmal und/oder wenn ein zweiter Schwellwert für eine vorbestimmte Anzahl erreicht ist.

System zum Ausführen des Verfahrens, wobei das System wenigstens einen Akkumulator, eine Datenverarbeitungseinrichtung mit einer Speichereinrichtung, eine Steuerungseinrichtung, wenigstens einen Sensor sowie eine Sende- und Empfangseinrichtung enthält.

## Beschreibung

Die vorliegende Erfindung betrifft ein Verfahren zum Betreiben eines Systems enthaltend wenigstens einen Akkumulator, eine Datenverarbeitungsvorrichtung mit einer Speichereinrichtung, eine Steuerungseinrichtung, wenigstens einen Sensor sowie eine Sende- und Empfangseinrichtung.

Darüber hinaus betrifft die vorliegende Erfindung ein System zum Ausführen des Verfahrens, wobei das System wenigstens einen Akkumulator, eine Datenverarbeitungseinrichtung mit einer Speichereinrichtung, eine Steuerungseinrichtung, wenigstens einen Sensor sowie eine Sende- und Empfangseinrichtung enthält.

Werkzeugmaschinen können durch einen oder auch mehrere Akkumulatoren mit elektrischer Energie versorgt und betrieben werden. Obwohl moderne Akkumulatoren, insbesondere Akkumulatoren basierend auf Lithium-Ionen-Technologie, relativ robust gebaut sind, kann eine unsachgemäße Handhabung sowie extreme externe Bedingungen. Zu diesen externen Bedingungen können beispielsweise hohe Außentemperaturen oder eine hohe Luftfeuchtigkeit zählen.

Moderne Akkumulatoren enthalten oftmals einen oder mehrere Sensoren sowie eine Steuerungsvorrichtung, um die verschiedensten Einflüsse auf den Akkumulator zu erfassen. Die Steuerungsvorrichtung enthält wiederum eine Speichereinrichtung mit hinterlegten Schwellwerten. Die von den Sensoren erfassten Werte werden entsprechend mit den Schwellwerten verglichen. Das Erreichen eines in der Speichereinrichtung hinterlegten Schwellwerts dient damit als Indikator für eine potenzielle Beschädigung, Fehlfunktion und/oder anstehenden Ausfall des Akkumulators. Wenn von dem System erkannt wird, dass ein Schwellwert von einem erfassten Wert erreicht wurde, kann eine entsprechende Maßnahme ergriffen. Eine Maßnahme kann beispielsweise das Aussenden eines Wahrsignals durch eine Anzeigevorrichtung an den Verwender des Akkumulators sein, wodurch der Verwender auf ein mögliches Problem hingewiesen wurde und den Akkumulator nicht länger betreiben sollte.

Ein Problem im Zusammenhang mit derartigen Akkumulatoren, die Erfassungs- und Warnvorrichtungen enthalten, ist jedoch, dass diese oftmals viel zu früh, d.h. noch bevor ein echtes technisches Problem mit dem Akkumulator besteht, ein Warnsignal aussenden. Aus Sorge vor einer möglichen Gefahr wird hierdurch der Akkumulator nicht mehr verwendet oder sogar entsorgt, obgleich dieser noch voll funktionsfähig ist.

Darüber hinaus besteht auch das Problem, dass gelegentlich ein Warnsignal gar nicht oder zu spät ausgesendet wird, obwohl bereits eine technische Fehlfunktion in dem Akkumulator besteht.

Aufgabe der vorliegenden Erfindung ist es daher das vorstehend genannte Problem zu lösen und ein Verfahren zum Betreiben eines Systems enthaltend wenigstens einen Akkumulator, eine Datenverarbeitungsvorrichtung mit einer Speichereinrichtung, eine Steuerungseinrichtung, wenigstens einen Sensor sowie eine Sende- und Empfangseinrichtung und ein System zum Ausführen des Verfahrens bereitzustellen, mit dem eine bessere Überwachung der Funktionen eines Akkumulators erreicht werden kann

Die Aufgabe wird jeweils gelöst durch den Gegenstand des unabhängigen Anspruchs 1 und 6. Weitere vorteilhafte Ausgestaltungsformen der Erfindung finden sich in den entsprechenden Unteransprüchen.

Die Aufgabe wird insbesondere gelöst durch ein Verfahren zum Betreiben eines Systems enthaltend wenigstens einen Akkumulator, eine Datenverarbeitungsvorrichtung mit einer Speichereinrichtung, eine Steuerungseinrichtung, wenigstens einen Sensor sowie eine Sende- und Empfangseinrichtung.

Erfindungsgemäß enthält das Verfahren die Verfahrensschritte:
- Erfassen von Werten durch den wenigstens einen Sensor;
- Senden der erfassten Werte mit der Sende- und Empfangseinrichtung zu der Datenverarbeitungsvorrichtung;
- Abgleichen der erfassten Werte mit in der Speichereinrichtung hinterlegten Schwellwerten;
- Speichern des Ereignisses in der Speichereinrichtung, dass ein erfasster Wert einen Schwellwert erreicht; und
- Einstellen des wenigstens einen Akkumulators von einem ersten Betriebszustand in einen zweiten Betriebszustand, wenn ein erster Schwellwert einmal und/oder wenn ein zweiter Schwellwert für eine vorbestimmte Anzahl erreicht ist.

Gemäß einer vorteilhaften Ausführungsform der vorliegenden Erfindung kann es möglich sein, dass durch das Einstellen des wenigstens einen Akkumulators von dem ersten Betriebszustand in einen zweiten Betriebszustand eine Abgabe von elektrischer Energie aus dem wenigstens einen Akkumulator wenigstens zeitweise blockiert ist. Hierdurch kann verhindert werden, dass ein möglicherweise beschädigter Akkumulator weiter beschädigt wird. Darüber hinaus dient die blockierte Abgabe von elektrischer Energie als Indikator für eine Fehlfunktion und/oder Beschädigung des Akkumulators.

Entsprechend einer vorteilhaften Ausführungsform der vorliegenden Erfindung kann es möglich sein, dass durch das Einstellen des wenigstens einen Akkumulators von dem ersten Betriebszustand in einen zweiten Betriebszustand eine Aufnahme von elektrischer Energie in den wenigstens einen Akkumulator wenigstens zeitweise blockiert ist. Hierdurch kann ebenfalls effektiv verhindert werden, dass ein möglicherweise beschädigter Akkumulator weiter beschädigt wird. Des Weiteren dient die blockierte Aufnahme von elektrischer Energie als Indikator für eine Fehlfunktion und/oder Beschädigung des Akkumulators.

Gemäß einer vorteilhaften Ausführungsform der vorliegenden Erfindung kann es möglich sein, dass durch das Einstellen des wenigstens einen Akkumulators von dem ersten Betriebszustand in einen zweiten Betriebszustand wenigstens ein Signal von der Sende- und Empfangseinrichtung ausgesendet wird. Das von der Sende- und Empfangseinrichtung kann beispielsweise von einem externen Gerät, wie z.B. einem Smartphone, empfangen werden und einem Anwender eine Fehlfunktion und/oder Beschädigung des Akkumulators anzeigen. Durch das Aussenden eines entsprechenden Signals auf eine externes Gerät mit einer Wiedergabe- bzw. Anzeigevorrichtung (z.B. Smartphone) kann dem Anwender des Akkumulators ausführlich die Fehlfunktion und/oder Beschädigung des Akkumulators bzw. des betroffenen Bauteils angezeigt werden.

Entsprechend einer vorteilhaften Ausführungsform der vorliegenden Erfindung kann es möglich sein, dass durch das Einstellen des wenigstens einen Akkumulators von dem ersten Betriebszustand in einen zweiten Betriebszustand die in der Speichereinrichtung hinterlegten Schwellwerten geändert werden. Hierdurch kann der Akkumulator auf neue Schwellwerte eingestellt, wenn weitere Erfahrungswerte hierzu vorliegen.

Darüber hinaus wird die Aufgabe gelöst durch ein System zum Ausführen des Verfahrens.

Gemäß einer vorteilhaften Ausführungsform der vorliegenden Erfindung kann es möglich sein, dass die Datenverarbeitungseinrichtung als externe IT-Infrastruktur, insbesondere als Cloud Computing, ausgebildet ist. Hierdurch kann zentral eine sehr hohe Menge an Daten verarbeitet und gespeichert werden. Durch die generell einfachen Zugriffsmöglichkeiten auf eine als Cloud ausgestaltete Datenverarbeitungsvorrichtung können relativ einfach Daten und Informationen gleichzeitig auf mehrere Akkumulator gesendet werden. Des Weiteren ist es durch die als Cloud ausgestaltete Datenverarbeitungsvorrichtung einfacher auch eine hohe Anzahl an Akkumulatoren zu verwalten und aktualisieren.

Entsprechend einer vorteilhaften Ausführungsform der vorliegenden Erfindung kann es möglich sein, dass der wenigstens eine Akkumulator die Datenverarbeitungseinrichtung enthält.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: ein erfindungsgemäßes System mit einem ersten Akkumulator, einer Datenverarbeitungsvorrichtung mit einer Speichereinrichtung, einer Steuerungseinrichtung, wenigstens einem Sensor sowie einer Sende- und Empfangseinrichtung gemäß einer ersten beispielhaften Ausführungsform;
- Figur 2: das erfindungsgemäße System mit dem ersten Akkumulator und einer extern ausgestalteten Datenverarbeitungseinrichtung gemäß einer zweiten beispielhaften Ausführungsform; und
- Figur 3: das erfindungsgemäße System mit dem ersten Akkumulator, der extern ausgestalteten Datenverarbeitungseinrichtung sowie einem zweiten, dritten und vierten Akkumulator gemäß der zweiten beispielhaften Ausführungsform.

### Ausführungsbeispiele:

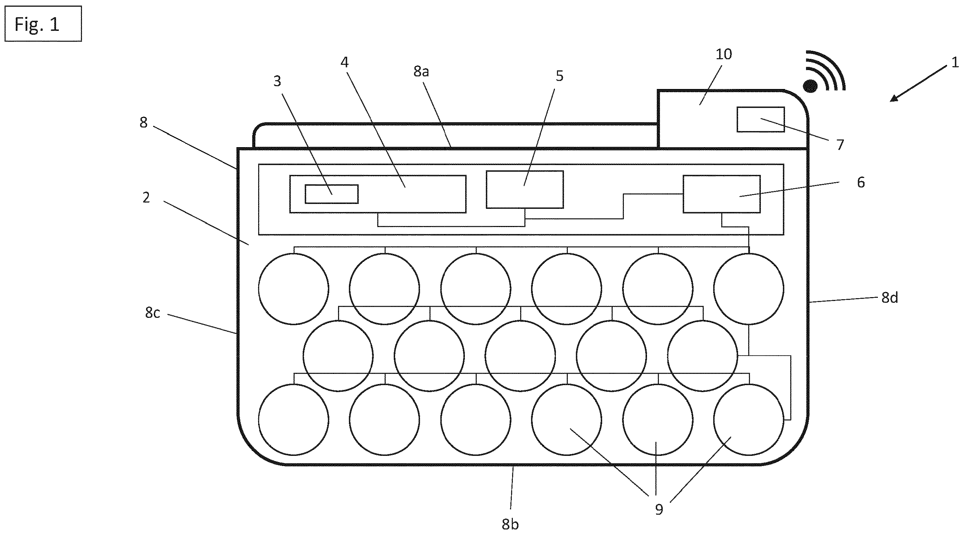

In Figur 1 ist ein erstes erfindungsgemäßes System 1 mit einem Akkumulator 2, einer Datenverarbeitungsvorrichtung 3 mit einer Speichereinrichtung 4, einer Steuerungseinrichtung 5, wenigstens einem Sensor 6 sowie einer Sende- und Empfangseinrichtung 7 gemäß einer ersten beispielhaften Ausführungsform gezeigt.

Der Akkumulator enthält dabei ein Gehäuse 8, eine Anzahl an Energiespeicherzellen 9, die Datenverarbeitungsvorrichtung 3 mit der Speichereinrichtung 4, die Steuerungseinrichtung 5, den Sensor 6 sowie die Sende- und Empfangseinrichtung 7.

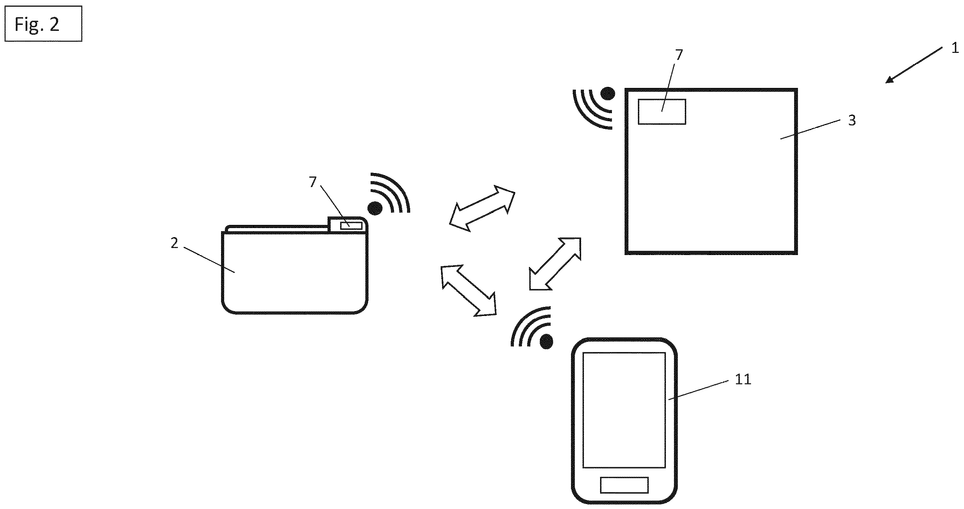

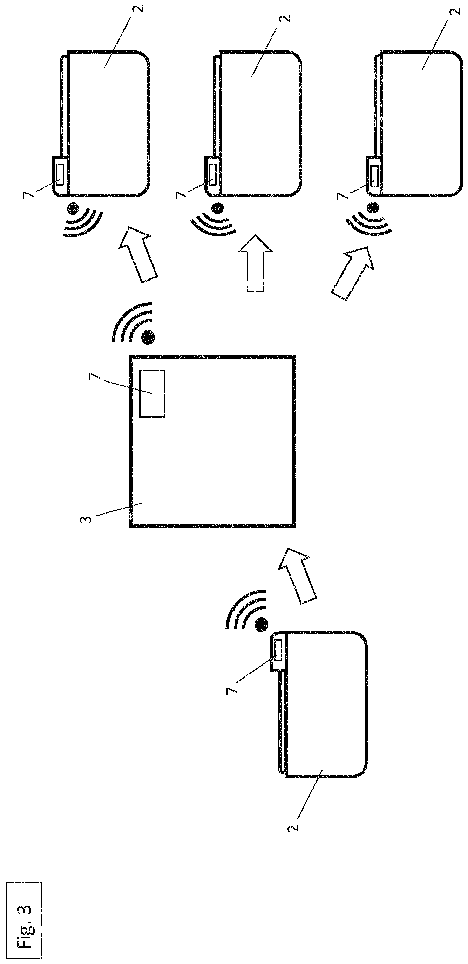

Eine weitere beispielhafte Ausführungsform des erfindungsgemäßen Systems 1 ist in den Figuren 2 und 3 gezeigt.

Die Energiespeicherzellen 9 können auch als Akku-Zellen bezeichnet werden und basieren auf einer Lithium-Ionen-Technologie.

In dem vorliegenden Ausführungsbeispiel der vorliegenden Erfindung enthält die Datenverarbeitungsvorrichtung 3 die Speichereinrichtung 4. Gemäß eines alternativen Ausführungsbeispiels der vorliegenden Erfindung kann die Speichereinrichtung 4 auch als separate Komponente ausgestaltet sein. Wenn die Speichereinrichtung 4 als separate Komponente ausgestaltet ist, stehen die Datenverarbeitungsvorrichtung 3 und die Speichereinrichtung 4 in Verbindung zueinander.

Das Gehäuse 8 des Akkumulators 2 enthält eine Oberseite 8a, eine Unterseite 8b, eine Vorderseite 8c und eine Rückseite 8d.

An der Oberseite 8a des Gehäuses 8 ist eine Schnittstelleneinrichtung 10 vorgesehen. Mit Hilfe der Schnittstelleneinrichtung 10 kann der Akkumulator 2 wiederlösbar mit einer Werkzeugmaschine verbunden werden, um die in den Energiespeicherzellen gespeicherte elektrische Energie an die Werkzeugmaschine abzugeben.

Die Werkzeugmaschine kann als Bohrmaschine, Bohrhammer, Akku-Schrauber, Säge, Schleifgerät oder dergleichen ausgestaltet sein. Die Werkzeugmaschine ist in den Figuren nicht dargestellt.

Darüber hinaus kann durch die Schnittstelleneinrichtung 10 des Akkumulators 2 wiederlösbar mit einer Ladevorrichtung (auch Lader genannt) verbunden werden, um die Energiespeicherzellen 9 mit elektrischer Energie zu laden.

Die Ladevorrichtung ist in den Figuren nicht dargestellt.

Die Steuerungseinrichtung 5 ist in der Nähe der Oberseite 8a des Gehäuses 8 des Akkumulators 2 positioniert und dient im Wesentlichen dazu, den Betrieb des Akkumulators 2 zu überwachen und regeln. Darüber hinaus kann die Steuerungseinrichtung 5 den Akkumulator 2 in unterschiedliche Betriebszustände versetzten. So ist es beispielsweise möglich, dass aufgrund eines bestimmten Vorkommnisses die Steuerungseinrichtung 5 den Akkumulator 2 in einen Zustand versetzt, in dem elektrische Energie weder von den Energiespeicherzellen 9 aufgenommen oder abgegeben werden kann. Eine derartige Änderung des Betriebszustands kann wegen einer möglichen Fehlfunktion des Akkumulators 2 oder der Energiespeicherzellen 9 getätigt werden.

Die Sende- und Empfangseinrichtung 7 ist an der Oberseite 8a des Gehäuses 8 des Akkumulators 2 in der Schnittstelleneinrichtung 10 positioniert und dient sowohl zum Aussenden als auch Empfangen von Signalen. Signalen können mit Hilfe der Sende- und Empfangseinrichtung 7 von dem Akkumulator 2 zu einem externen Gerät oder Vorrichtung 11 gesendet und von diesem empfangen werden.

Bei dem externen Gerät 11 kann es sich beispielsweise um ein Smartphone oder aber um einen anderen Akkumulator 2 handeln.

Die Sende- und Empfangseinrichtung 7 basiert in dem vorliegenden Ausführungsbeispiel auf Bluetooth-Technologie. Gemäß eines alternativen Ausführungsbeispiels kann die Sende- und Empfangseinrichtung 7 auch auf einer RFID-Technologie (radio-frequency identification) und insbesondere auf einer NFC-Technologie (Near Field Communication) oder aber auf jeder anderen drahtlosen Datenübertragungstechnologie basieren. Wie in Figur 1 angedeutet ist die Sende- und Empfangseinrichtung 7 so mit der Datenverarbeitungsvorrichtung 3, der Speichereinrichtung 4 sowie der Steuerungseinrichtung 5 verbunden, dass Signale und Daten ausgetauscht werden können.

Der Sensor 6 ist ebenfalls in der Nähe der Oberseite 8a des Gehäuses 8 des Akkumulators 2 positioniert. Der Sensor 6 ist in dem vorliegenden Ausführungsbeispiel als Temperatursensor (d.h. Thermometer) ausgestaltet und mit der Datenverarbeitungsvorrichtung 3 sowie mit der Steuerungseinrichtung 5 verbunden. Wie in Figur 1 dargestellt ist der Temperatursensor 6 so mit jeder einzeln Energiespeicherzelle 9 verbunden, dass die Temperatur an jeder einzelnen Energiespeicherzelle 9 erfasst werden kann.

Gemäß einem weiteren Ausführungsbeispiel der vorliegenden Erfindung kann der Sensor 6 alternativ auch als Gyro-Sensor (bzw. Beschleunigungssensor), Spannungssensor oder Drucksensor ausgestaltet sein. Der Sensor 6 dient im Wesentlichen dazu wenigstens einen Zustandswert der Energiespeicherzellen 9 zu erfassen und an die Datenverarbeitungsvorrichtung 3 zu senden. Darüber hinaus ist es auch möglich, dass mehr als ein Sensor 6 zum Erfassen von unterschiedlichen Zustandswerten vorgesehen ist.

Wie in Figur 1 angedeutet ist die Datenverarbeitungsvorrichtung 3 mit der Speichereinrichtung 4 in der Nähe der Oberseite 8a des Gehäuses 8 des Akkumulators 2 positioniert. Die Datenverarbeitungsvorrichtung 3 dient zur Verarbeitung von dem Sensor 6 erfassten Zustandswerten des Akkumulators 2 oder Bauteilen des Akkumulators 2. Die Steuerungseinrichtung 5 und die Datenverarbeitungsvorrichtung 3 stehen so miteinander in Verbindung, dass Signale und Daten zwischen der Steuerungseinrichtung 5 und der Datenverarbeitungsvorrichtung 3 ausgetauscht werden können.

In der Speichereinrichtung 4 sind unter anderem Schwellwerte hinterlegt bzw. gespeichert. Mit Hilfe der Datenverarbeitungsvorrichtung 3 werden die von dem Sensor 6 erfassten Zustandswerte mit den Schwellwerten verglichen. Das Erreichen oder auch das Überschreiten eines Schwellwertes durch einen erfassten Wert wird von der Datenverarbeitungsvorrichtung 3 erkannt und in der Speichereinrichtung 4 gespeichert.

Des Weiteren ist die Datenverarbeitungsvorrichtung 3 auch so ausgestaltet, dass außerdem die Anzahl des Erfassens von bestimmten Zustandswerten von der Datenverarbeitungsvorrichtung 3 registriert und in der Speichereinrichtung 4 gespeichert wird, auch wenn der jeweilige von dem Sensor 6 erfasste Wert noch gar nicht den entsprechenden Schwellwert erreicht oder überschritten hatte. So wird beispielsweise die Anzahl des Auftretens von Beschleunigungswerten, die mit Hilfe des Gyro-Sensors erfasst werden und die noch unter dem jeweiligen Schwellwert liegen, von der Datenverarbeitungsvorrichtung 3 registriert und in der Speichereinrichtung 4 gespeichert.

Wenn von der Datenverarbeitungsvorrichtung 3 unter Zuhilfenahme der in der Speichereinrichtung 4 hinterlegten Schwellwerte registriert wird, dass ein von dem Sensor 6 erfasster Zustandswert des Akkumulators 2 einen Schwellwert erreicht hat, wird ein entsprechendes Signal an die Steuerungseinrichtung 5 gesendet. Mit Hilfe des ausgesendeten Signals wird durch die Steuerungseinrichtung 5 der Akkumulator 2 von einem Betriebszustand in einen anderen Betriebszustand gebracht. So wird entsprechend einer ersten Maßnahme die weitere Abgabe von elektrischer Energie aus den Energiespeicherzellen 9 durch die Steuerungseinrichtung 5 blockiert bzw. verhindert, wenn der als Temperatursensor ausgestaltete Sensor 6 eine Temperatur an einer Energiespeicherzelle 9 erfasst, die einem hinterlegten Temperaturschwellwert entspricht. Eine zu hohe Temperatur einer Energiespeicherzelle 9 kann auf eine mögliche Fehlfunktion des Akkumulators 2 hindeuten. Es ist dabei jedoch auch möglich, dass das Blockieren bzw. das Verhindern der Abgabe von elektrischer Energie aus den Energiespeicherzellen 9 an eine Werkzeugmaschine auf eine gewisse Zeitdauer begrenzt ist bis die Temperatur der Energiespeicherzellen 9 wieder unter den Temperaturschwellwert gesunken ist. Wenn der Temperatursensor 6 eine Temperatur erfasst, die niedriger als der Temperaturschwellwert ist, kann die Abgabe von elektrischer Energie aus den Energiespeicherzellen 9 an die Werkzeugmaschine wieder erfolgen.

Ebenso ist es auch möglich, dass die Aufnahme von elektrischer Energie in die Energiespeicherzelle 9 blockiert bzw. verhindert wird, wenn der Sensor 6 einen Zustandswert des Akkumulator 2 erfasst, der den jeweiligen Schwellwert erreicht hat.

Durch die Sende- und Empfangseinrichtung 7 können neue Schwellwerte in die Speichereinrichtung 4 aufgenommen werden. Die neuen Schwellwerte können dabei die bereits bestehenden Schwellwerte ersetzen oder diese ergänzen. Wenn aufgrund von weiteren Forschungs- und Entwicklungsarbeiten oder durch Erfahrungen bessere Schwellwerte ermittelt worden sind, werden die Akkumulatoren 2 mit diesen ausgestattet.

Des Weiteren wird entsprechend einer zweiten Maßnahme von der Sende- und Empfangseinrichtung 7 ein entsprechendes Signal an ein Smartphone 11 des Anwenders des Akkumulators 2 gesendet. Durch das ausgesendete Signal kann der Anwender auf dem Smartphone den Hinweis erkennen, dass eine mögliche Fehlfunktion an dem Akkumulator 2 vorliegt.

Wie in Figur 2 angedeutet ist gemäß eines alternativen Ausführungsbeispiels die Datenverarbeitungsvorrichtung 3 als externe bzw. eigenständige Komponente des Systems ausgestaltet. Die Datenverarbeitungsvorrichtung 3 enthält eine Sende- und Empfangseinrichtung 7, sodass Signale und Daten zwischen dem Akkumulator 2 und der externen Datenverarbeitungsvorrichtung 3 ausgetauscht werden können. In dem vorliegenden Ausführungsbeispiel ist die Datenverarbeitungseinrichtung 3 als externe IT-Infrastruktur. Bei der externen IT-Infrastruktur handelt es sich um Cloud Computing (auch Cloud genannt).

Entspricht diesem weiteren Ausführungsform der vorliegenden Erfindung erfasst der Sensor 6 Zustandswerte des Akkumulators 2, die mit Hilfe der Sende- und Empfangseinrichtung 7 an die externe und als Cloud ausgestaltete Datenverarbeitungseinrichtung 3 gesendet werden. Die erfassten Zustandswerte werden in der als Cloud ausgestaltete Datenverarbeitungseinrichtung 3 mit hinterlegten Schwellwerten verglichen. In dem Fall, dass ein erfasster Zustandswert einen entsprechenden Schwellwert erreicht oder auch überschritten haben sollte, wird entsprechendes Signal durch die Sende- und Empfangseinrichtung 7 an den Akkumulator 2 gesendet. Das Signal wird an die Steuerungseinrichtung 5 weitergeleitet. Die Steuerungseinrichtung 5 interpretiert und evaluiert das Signal und bewirkt, dass bestimmte Maßnahmen entsprechend dem Erreichen eines Schwellwertes in dem Akkumulator 2 durchgeführt werden. Wie bereits vorstehend erwähnt kann eine entsprechende Maßnahme das Blockieren einer weiteren Abgabe von elektrischer Energie aus den Energiespeicherzellen 9 darstellen.

Darüber hinaus ist es auch die als Cloud ausgestaltete Datenverarbeitungsvorrichtung 3 als zentrales Verwaltungs-, Steuerungs- und Aktualisierungsvorrichtung zu verwenden. Wie in Figur 3 gezeigt ist es möglich, dass die als Cloud ausgestaltete Datenverarbeitungseinrichtung 3 mit mehreren Akkumulatoren 2 gleichzeitig Signale und Daten austauscht.

In dem Falle, dass geänderte Temperaturschwellwerte für die Akkumulatoren 2 ermittelt werden, werden diese lediglich in der als Cloud ausgestalteten Datenverarbeitungsvorrichtung 3 gespeichert. Der Abgleich, ob ein Zustandswert, der von einem Sensor 6 in einem bestimmten Akkumulator 2 erfasst wird, einen entsprechenden Schwellwert erreicht oder bereits überschritten hat, wird in der externen Datenverarbeitungsvorrichtung 3 ermittelt.

Wenn beispielsweise Zustandswerte in Bezug auf den Ladezustand bzw. die SoC (state of charge) oder den Alterungszustand bzw. die SoH (state of health) mit Hilfe eines oder mehrerer Sensoren 6 in einem Akkumulator 2 erfasst wird, können diese an die als Cloud ausgestaltete Datenverarbeitungsvorrichtung 3 gesendet werden. Die Datenverarbeitungsvorrichtung 3 kann aufgrund der erfassten Zustandswerte für die SoC und/oder SoH eine Restlaufzeit für den jeweiligen Akkumulator 2 ermitteln. Dies ist insbesondere möglich, wenn der Akkumulator 2 über einen längeren Zeitraum bzw. regelmäßig erfasste Zustandswerte für die SoC und/oder SoH an die Datenverarbeitungsvorrichtung 3 sendet. Durch Extrapolation bzw. Hochrechnungen kann mit Hilfe der erfassten und gespeicherten Zustandswerte eine relativ verlässliche Aussage über den Zeitraum ermitteln, in dem der Akkumulator 2 noch voll funktionsfähig ist. Derartige Berechnungen verbessern sich durch das Sammeln und für die Berechnung zugrunde legen von entsprechenden Zustandswerten von unterschiedlichen Akkumulatoren 2.

### Bezugszeichen:

- 1: System
- 2: Akkumulator
- 3: Datenverarbeitungsvorrichtung
- 4: Speichereinrichtung
- 5: Steuerungseinrichtung
- 6: Sensor
- 7: Sende- und Empfangseinrichtung
- 8: Gehäuse des Akkumulator
- 8a: Oberseite des Gehäuses
- 8b: Unterseite des Gehäuses
- 8c: Vorderseite des Gehäuses
- 8d: Rückseite des Gehäuses
- 9: Energiespeicherzelle
- 10: Schnittstelleneinrichtung
- 11: externes Gerät

## Patentansprüche

1. Verfahren zum Betreiben eines Systems (1) enthaltend wenigstens einen Akkumulator (2), eine Datenverarbeitungsvorrichtung (3) mit einer Speichereinrichtung (4), eine Steuerungseinrichtung (5), wenigstens einen Sensor (6) sowie eine Sende- und Empfangseinrichtung (7)
**gekennzeichnet durch** die Verfahrensschritte
- Erfassen von Werten durch den wenigstens einen Sensor (6);
- Senden der erfassten Werte mit der Sende- und Empfangseinrichtung (7) zu der Datenverarbeitungsvorrichtung (3);
- Abgleichen der erfassten Werte mit in der Speichereinrichtung (4) hinterlegten Schwellwerten;
- Speichern des Ereignisses in der Speichereinrichtung (4), dass ein erfasster Wert einen Schwellwert erreicht; und
- Einstellen des wenigstens einen Akkumulators (2) von einem ersten Betriebszustand in einen zweiten Betriebszustand, wenn ein erster Schwellwert einmal und/oder wenn ein zweiter Schwellwert für eine vorbestimmte Anzahl erreicht ist.

2. Verfahren nach Anspruch 1,
**dadurch gekennzeichnet, dass** durch das Einstellen des wenigstens einen Akkumulators (2) von dem ersten Betriebszustand in einen zweiten Betriebszustand eine Abgabe von elektrischer Energie aus dem wenigstens einen Akkumulator (2) wenigstens zeitweise blockiert ist.

3. Verfahren nach Anspruch 1 oder 2,
**dadurch gekennzeichnet, dass** durch das Einstellen des wenigstens einen Akkumulators (2) von dem ersten Betriebszustand in einen zweiten Betriebszustand eine Aufnahme von elektrischer Energie in den wenigstens einen Akkumulator (2) wenigstens zeitweise blockiert ist.

4. Verfahren nach wenigstens einem der Ansprüche 1 bis 3,
**dadurch gekennzeichnet, dass** durch das Einstellen des wenigstens einen Akkumulators (2) von dem ersten Betriebszustand in einen zweiten Betriebszustand wenigstens ein Signal von der Sende- und Empfangseinrichtung (7) ausgesendet wird.

5. Verfahren nach wenigstens einem der Ansprüche 1 bis 4,
**dadurch gekennzeichnet, dass** durch das Einstellen des wenigstens einen Akkumulators (2) von dem ersten Betriebszustand in einen zweiten Betriebszustand die in der Speichereinrichtung (4) hinterlegten Schwellwerten geändert werden.

6. System (1) zum Ausführen des Verfahrens nach wenigstens Anspruch 1, wobei das System (1) wenigstens einen Akkumulator (2), eine Datenverarbeitungseinrichtung (3) mit einer Speichereinrichtung (4), eine Steuerungseinrichtung (5), wenigstens einen Sensor (6) sowie eine Sende- und Empfangseinrichtung (7) enthält.

7. System (1) nach Anspruch 6,
**dadurch gekennzeichnet, dass** die Datenverarbeitungseinrichtung (3) als externe IT-Infrastruktur, insbesondere als Cloud Computing, ausgebildet ist.

8. System (1) nach Anspruch 6,
**dadurch gekennzeichnet, dass** der wenigstens eine Akkumulator (2) die Datenverarbeitungseinrichtung (3) enthält.
